(19) Europäisches Patentamt
European Patent Office
Office européen des brevets

(11) **EP 2 956 661 B1**

(12) **EUROPÄISCHE PATENTSCHRIFT**

(45) Veröffentlichungstag und Bekanntmachung des Hinweises auf die Patenterteilung:
**14.03.2018   Patentblatt 2018/11**

(21) Anmeldenummer: **14700964.1**

(22) Anmeldetag: **21.01.2014**

(51) Int Cl.:
*F03D 7/02* *(2006.01)*      *F03D 80/00* *(2016.01)*

(86) Internationale Anmeldenummer:
**PCT/EP2014/000149**

(87) Internationale Veröffentlichungsnummer:
**WO 2014/124725 (21.08.2014 Gazette 2014/34)**

(54) **VERFAHREN ZUM ÜBERPRÜFEN DES BETRIEBS EINER WINDENERGIEANLAGE UND WINDENERGIEANLAGE**

METHOD FOR TESTING THE OPERATION OF A WIND TURBINE, AND A WIND TURBINE

PROCÉDÉ PERMETTANT DE CONTRÔLER LE FONCTIONNEMENT D'UNE ÉOLIENNE ET ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2013   DE 102013202261**

(43) Veröffentlichungstag der Anmeldung:
**23.12.2015   Patentblatt 2015/52**

(73) Patentinhaber: **Senvion GmbH**
**22297 Hamburg (DE)**

(72) Erfinder: **KRAMER, Bertin**
**49088 Osnabrück (DE)**

(74) Vertreter: **Wallinger Ricker Schlotter Tostmann Patent- und Rechtsanwälte mbB**
**Zweibrückenstraße 5-7**
**80331 München (DE)**

(56) Entgegenhaltungen:
EP-A1- 2 511 524      WO-A2-2012/000509
US-A1- 2010 332 272      US-A1- 2012 253 697

**Beschreibung**

Die Erfindung betrifft ein Verfahren zur Überwachung des Betriebs einer Windenergieanlage mit einem Turm, einer auf dem Turm angeordneten Gondel und einem Rotor, der wenigstens ein blattwinkelverstellbares Rotorblatt aufweist, wobei während des Betriebs der Windenergieanlage mittels wenigstens einer Messvorrichtung Rotorblattschwingungen des wenigstens einen Rotorblatts erfasst werden und aus den erfassten Rotorblattschwingungen wenigstens eine momentane Eigenfrequenz des wenigstens einen Rotorblatts ermittelt wird, wobei zusätzlich wenigstens ein Umweltparameter und/oder wenigstens ein Betriebsparameter erfasst wird oder werden, der oder die die Eigenfrequenz des wenigstens einen Rotorblatts beeinflusst oder beeinflussen. Die Erfindung betrifft weiter eine Betriebssteuerungseinrichtung einer Windenergieanlage sowie eine entsprechende Windenergieanlage.

Die vorliegende Erfindung betrifft insbesondere die Überwachung des Zustandes von Rotorblättern einer Windenergieanlage. Diese gehören zu den am höchsten belasteten Komponenten einer Windenergieanlage in deren Betrieb. Die Rotorblätter sind dem Wind ausgesetzt und übertragen die im Wind gespeicherte Energie in eine Rotationsbewegung, wobei sie großen Schubkräften, Biegekräften, Fliehkräften, Turbulenzen, Lastwechseln usw. ausgesetzt sind. Zusätzlich sind die Rotorblätter auch Umgebungseinflüssen wie Sonnenstrahlung, Regen, Schneefall und Eisansatz ausgesetzt.

Um eine Windenergieanlage wirtschaftlich zu betreiben, sind die Rotorblätter zwar für eine hohe Lebensdauer auszulegen, jedoch auch so leicht wie möglich. Bei ihrer Auslegung sind sowohl die Aerodynamik, die auftretenden Lasten, die Dynamik des Betriebs, die Möglichkeit der Regelung und Betriebsführung sowie das Material zu berücksichtigen. Sicherheitsaspekte sind dabei unter anderem Unwuchten, Resonanzen, Eisabwurf und Materialermüdung, die ebenfalls bei Rotorblättern auftreten können. In Bezug auf die Wirtschaftlichkeit sind für die Rotorblätter insbesondere die Energieproduktion, bezogen auf den Standort, damit einhergehend Windmessungen zu berücksichtigen sowie die möglichst hohe Lebensdauer der Rotorblätter.

Da die Rotorblätter aus Gründen der Wirtschaftlichkeit nicht zu stark dimensioniert sein dürfen, ist es wünschenswert, Rotorblätter im Betrieb zu überwachen, um sicherzustellen, dass bei verstärkten Belastungen, die über die der Auslegung der Rotorblätter zugrunde liegenden Belastungen hinausgehen, Maßnahmen getroffen werden können, um diese Belastungen zu reduzieren. Ein Beispiel hierfür ist der Einsatz der Überwachung für die Erkennung von Eisansatz an Rotorblättern, der an vielen Standorten mit relativ kaltem Klima wünschenswert ist. Eisansatz kann sich bereits ab Temperaturen unterhalb von 3° Celsius bilden und belastet einerseits als zusätzliche Masse die Rotorblätter und bildet andererseits als Quelle für Eisabwurf eine Gefahr für Menschen, Tiere und Gegenstände in einem weiten Umkreis.

Ein Verfahren und eine Vorrichtung zur Überwachung des Zustandes von Rotorblättern an Windkraftanlagen ist aus DE 10 2005 017 054 A1 bekannt. Dabei wird der Zustand von Rotorblättern mittels Messung von Körperschall zumindest eines Rotorblatts mit zumindest einem am Rotorblatt befestigten Sensor überwacht, der mit einer Einheit zur drahtlosen Übertragung der Ausgangssignale der Sensoren an eine Auswerteeinheit verbunden ist, wo aus den Signalen mittels geeigneter Methoden ein Frequenzspektrum ermittelt, das Frequenzspektrum mit in der Auswerteeinheit hinterlegten, definierten Schadens- und Sonderzuständen entsprechenden und parametrisierten Referenzspektren verglichen und daraus der Zustand des Rotorblatts ermittelt wird. Dabei erfolgt eine Körperschallmessung aus einer Abfolge einer Mehrzahl von unmittelbar nacheinander durchgeführten Einzelmessungen, wobei der Start jeder dieser Einzelmessungen auf einen einheitlichen Drehwinkel des Rotorblatts, bezogen auf die Drehachse des Rotors, getriggert wird und vor dem Vergleich mit den Referenzspektren alle ermittelten Frequenzspektren jeder Einzelmessung akkumuliert werden.

Durch die Triggerung auf den einheitlichen Drehwinkel ist es möglich, nicht nur den Amplitudenverlauf des Frequenzspektrums zu ermitteln, sondern auch dessen Phasenlage. Die Messungen werden mit einer hohen Wiederholungsrate bzw. Abtastrate durchgeführt, um das Oberwellenspektrum einzufangen. Die Amplituden und Phasen der einzelnen Oberwellen der Grundwellen (Eigenfrequenzen) des Rotorblatts werden in einen Vektor überführt, der dann mit geeigneten statistischen Methoden mit Vektoren der Frequenzspektren für verschiedene Schadensfälle verglichen wird, um eine Ähnlichkeit mit bekannten Schadensfällen festzustellen. Da dieses Verfahren vielfältig einsetzbar und sehr mächtig ist, erfordert es ein zusätzliches System, das in eine Windenergieanlage eingebracht werden muss.

WO 2012/000509 A2 betrifft ein Verfahren zur Erkennung von Eisbildung und anderen Belastungen von Rotorblättern von Windenergieanlagen. Dabei werden bestehende Aktuatoren, beispielsweise Blattwinkelaktuatoren, zur Anregung von Rotorblattvibrationen verwendet. Vibrationssensoren an dem Rotorblatt messen die Blattvibrationen. Die Messantwort wird mit früher aufgenommenen Referenzantworten verglichen, so dass es ermöglicht wird, eine Rotorblattvereisung festzustellen. Alternativ können die Sensordaten dieses aktiven Systems auch als Input zu einem mathematischen Modell zur Bestimmung des sich ändernden Verhaltens der Rotorblätter verwendet werden. Das System enthält einen Spektrenanalysator. Das Spektrum kann zur Zustandsbestimmung des Rotorblatts verwendet werden. Es werden auch Veränderungen der Resonanzfrequenzen oder Veränderungen im Spektrum erfasst und ausgewertet.

EP 2 511 524 A1 betrifft eine Vorrichtung und ein Verfahren zum Überwachen eines Rotorblatts für eine Windkraftanlage mittels einer Überwachungseinrichtung, die einen Sensor und zumindest eine von dem Sensor erfassbare, an dem Rotorblatt angeordnete Markierung umfasst. Es werden Bewegungsdaten aus den gemessenen Positionsdaten der Markierung ermittelt, wobei die Bewegungsdaten zeitabhängige Eigenformen und Schwingungen, insbesondere Eigenfrequenzen und/oder Schwingungsmodi, umfassen. Ferner werden Referenzdaten bereitgestellt, die mittels einer Simulation oder einer Referenzmessung ermittelt wurden. Durch die Auswertung der spektralen Informationen der aufgezeichneten Bewegungsdaten sind sehr genaue Überprüfungen des Zustands des Rotorblatts möglich. Auch Umweltparameter werden bei dem Vergleich mit Referenzdaten in Betracht gezogen.

Demgegenüber liegt der vorliegenden Erfindung die Aufgabe zugrunde, eine Überwachung des Betriebs einer Windenergieanlage, insbesondere in Bezug auf Eisansatz oder andere Schadensfälle, zur Verfügung zu stellen, die mit wenig Aufwand einen sicheren Betrieb der Windenergieanlage gewährleistet.

Diese Aufgabe wird durch ein Verfahren zur Überwachung des Betriebs einer Windenergieanlage mit einem Turm, einer auf dem Turm angeordneten Gondel und einem Rotor, der wenigstens ein blattwinkelverstellbares Rotorblatt aufweist, gelöst, wobei während des Betriebs der Windenergieanlage mittels wenigstens einer Messvorrichtung Rotorblattschwingungen des wenigstens einen Rotorblatts erfasst werden und aus den erfassten Rotorblattschwingungen wenigstens eine momentane Eigenfrequenz des wenigstens einen Rotorblatts ermittelt wird, wobei zusätzlich wenigstens ein Umweltparameter und wenigstens ein Betriebsparameter erfasst werden, die die wenigstens eine Eigenfrequenz des wenigstens einen Rotorblatts beeinflussen, das dadurch weitergebildet ist, dass zusätzlich wenigstens drei Parameter erfasst werden, nämlich

- eine Temperatur,
- eine Rotordrehzahl, eine Generatordrehzahl und/oder ein damit verbundener Parameter, insbesondere eine Windgeschwindigkeit, und
- ein Rotorblattwinkel und/oder eine erzeugte Leistung,

wobei für die wenigstens eine ermittelte momentane Eigenfrequenz des wenigstens einen Rotorblatts wenigstens ein von den zusätzlich erfassten Umweltparameter(n) und Betriebsparameter(n) abhängiger Eigenfrequenz-Erwartungswert und wenigstens ein Konfidenzintervall berechnet werden, wobei überwacht wird, ob die ermittelte momentane Eigenfrequenz innerhalb oder außerhalb des Konfidenzintervalls um den Eigenfrequenz-Erwartungswert liegt.

Damit stellt das erfindungsgemäße Verfahren eine besonders einfache und sichere Methode dar, Sonderfälle des Betriebs, wie beispielsweise Eisansatz an Rotorblättern, zu erkennen. Hierzu wird, wie dies bereits im Stand der Technik teilweise erfolgt, wenigstens eine Eigenfrequenz des Rotorblatts überwacht. Es können auch beispielsweise zwei bis vier Eigenfrequenzen überwacht werden, beispielsweise jeweils die erste und/oder zweite Eigenfrequenz in Schwenkrichtung und/oder in Schlagrichtung. Hierzu wird der zeitliche Verlauf von Rotorblattschwingungen mittels einer Messvorrichtung erfasst und aus den erfassten Rotorblattschwingungen eine momentane Eigenfrequenz des Rotorblatts ermittelt. Dies kann beispielsweise durch eine Fourier-Transformation, insbesondere eine Fast-Fourier-Transformation (FFT) geschehen, durch eine Wavelet-Analyse oder durch andere geeignete bekannte Verfahren sowie durch eine anschließende Maxima-Erkennung im Frequenzspektrum.

Anders als im Stand der Technik ist es allerdings nicht notwendig, ein ganzes Oberwellenspektrum zu erfassen. Der Verzicht hierauf vereinfacht das Verfahren bereits durch die Verringerung der Abtastrate deutlich. Da die Grundfrequenzen der Eigenfrequenzen von Rotorblättern üblicherweise im Bereich von ein bis wenigen Hz liegen, genügt es somit, die Schwingungen mit einer vergleichsweise niedrigen Sampling- bzw. Abtastrate zu erfassen. So erlaubt es bereits eine Abtastrate von nur 20 Hz im Prinzip, das Frequenzspektrum bis zu 10 Hz abzudecken, in dem sich die Grundschwingungen bzw. ersten Eigenfrequenzen sowie gegebenenfalls die zweiten Eigenfrequenzen üblicherweise befinden. Zur Verbesserung der Genauigkeit ist eine Abtastrate von bis zu 50 Hz vorteilhaft. Im Vergleich zu dem aus DE 10 2005 017 054 A1 bekannten Verfahren, bei dem für die Erfassung von Oberwellenspektren Sampling-Raten von bis zu 1000 Hz notwendig waren, ergibt sich somit eine deutliche Verringerung des Aufwands und der erforderlichen Verarbeitungsgeschwindigkeit.

Im Unterschied zu dem genannten Stand der Technik gemäß DE 10 2005 017 054 A1 ist es nunmehr auch nicht notwendig, ein Arsenal an Referenzspektren vorzuhalten, diese in Vektoren zu parametrisieren und eine Ähnlichkeitsanalyse durchzuführen, sondern es genügt, dass erfindungsgemäß ein Erwartungswert in Abhängigkeit von Umweltparametern und/oder Betriebsparametern der Windenergieanlage gebildet wird und die gemessenen Eigenfrequenzen mit diesem Erwartungswert verglichen werden. Der Erwartungswert hängt erfindungsgemäß von Umweltparametern und/oder Betriebsparametern ab. Der rechnerische Aufwand sowie der Aufwand in Bezug auf vorhandenen Speicherplatz ist gegenüber dem bekannten Verfahren damit deutlich reduziert.

Vorzugsweise wird eine Überschreitung des wenigstens einen Konfidenzintervalls an ein Betriebsführungssystem der Windenergieanlage gemeldet. Dabei bedeutet eine Überschreitung des Konfidenzintervalls, dass der Betrag der Differenz zwischen der ermittelten momentanen Eigenfrequenz und dem Erwartungswert größer ist als das Konfidenzintervall. Dies kann sowohl eine Überschreitung eines oberen Grenzwertes als auch eine Unterschreitung eines unteren Grenzwertes sein, wobei die Grenzwerte durch das Konfidenzintervall um den Erwartungswert herum gebildet werden. Eine solche Meldung kann, insbesondere bei Unterschreiten eines unteren Grenzwertes, vorzugsweise eine Eiswarnung oder eine Eismeldung sein. In diesem Fall ist die Anlage entweder stillzusetzen oder in einen Betrieb mit reduzierter Leistung zu versetzen, bei dem die Rotorblätter und die gesamte Windenergieanlage auch beispielsweise bei Eisansatz noch sicher betrieben werden.

Die Erfassung der Schwingungen des wenigstens einen Rotorblatts erfolgt vorzugsweise mittels rotorfester, insbesondere rotorblattfester, Sensorik, die insbesondere Beschleunigungssensoren, Verformungssensoren und/oder Dehnungssensoren umfasst. Entsprechende Dehnungssensoren sind vorzugsweise in der Rotorblattwurzel oder an der Rotorblattwurzel angeordnet. Vorteilhafte geeignete Sensoren sind Lichtleiter mit Faser-Bragg-Gittern (FBG). Auch Dehnungsmessstreifen oder akustische Sensoren, die eine Körperschallmessung vornehmen, sind im Rahmen der vorliegenden Erfindung geeignet.

Als Betriebsparameter wird erfindungsgemäß eine Rotordrehzahl, eine Generatordrehzahl oder ein damit verbundener Parameter erfasst. Die drehzahlabhängigen Fliehkräfte haben einen merklichen Einfluss auf die Eigenfrequenzen. Eine höhere Rotordrehzahl führt zu einer Versteifung, wie bei einer gespannten Saite, die zu einer Erhöhung der Eigenfrequenz führt.

Erfindungsgemäß wird oder werden alternativ oder zusätzlich als Umweltparameter eine Temperatur und/oder eine Windgeschwindigkeit erfasst und/oder wird und/oder werden als Betriebsparameter ein Rotorblattwinkel und/oder eine erzeugte Leistung erfasst. Diese Parameter haben direkt oder indirekt einen Einfluss auf das Schwingungsverhalten des überwachten Rotorblatts bzw. sind mit diesem korreliert. So versteift sich das Material des Rotorblatts bei sinkenden Temperaturen, was zu einer Erhöhung des E-Moduls und damit der Eigenschwingungsfrequenz führt. Der Rotorblattwinkel verändert die Ausrichtung des Rotorblatts zur Rotorebene und somit die schwingungstechnische Anbindung an das Gesamtsystem durch die Änderung der Einspannbedingung, so dass auch der Rotorblattwinkel einen Einfluss auf die Grundfrequenz bzw. die Eigenfrequenz oder Eigenfrequenzen des Rotorblatts hat.

Auch die erzeugte Leistung ist ein Faktor, der mit der Eigenfrequenz korreliert, da sich im Teillastbereich und im Volllastbereich der Windenergieanlage sowohl die Drehzahl als auch die Rotorblattwinkel ändern und mit steigender Windgeschwindigkeit die Rotorblätter stärker belastet werden und aus der Rotorebene herausgebogen werden. Auch die herrschende Windgeschwindigkeit ist mit der Eigenfrequenz bzw. den Eigenfrequenzen korreliert, insbesondere über die erzeugte Leistung, die Drehzahl und den Pitchwinkel.

Im Rahmen der Erfindung kann die Drehzahl sowohl die Drehzahl des Rotors als auch die Drehzahl des Generators sein, besonders im Falle von Windenergieanlagen, in denen der Rotor über ein Getriebe mit dem Generator verbunden ist. Ein solches Getriebe hat üblicherweise eine feste Übersetzung, so dass die Rotordrehzahl und die Getriebedrehzahl fest miteinander verknüpft sind.

Vorzugsweise ist eine dem wenigstens einen Eigenfrequenz-Erwartungswert zugrunde liegende Funktion mittels statistischer Auswertung von Messdaten auf eine aktuelle Turbinenkonfiguration anpassbar. Dies bedeutet im Rahmen der Erfindung, dass der wenigstens eine Eigenfrequenz-Erwartungswert bzw. die wenigstens eine erzeugende Funktion an eine aktuelle Turbinenkonfiguration angepasst werden kann und nicht zu Beginn des Betriebs einer Windenergieanlage ein für alle Mal fest eingestellt ist. Die aktuelle Konfiguration kann bauliche Veränderungen erfahren oder beispielsweise Alterserscheinungen an Komponenten wie Rotorblättern. Diese können zu einer schleichenden Veränderung der überwachten Eigenfrequenzen führen, die im Laufe der Lebensdauer einer Windenergieanlage bei der Überwachung berücksichtigt werden sollten. Hierzu kann beispielsweise überwacht werden, ob die Messwerte für die Eigenfrequenz des Rotorblatts systematisch über oder unter dem Erwartungswert liegen. Wenn dies im normalen Betrieb ohne Störungsanzeige geschieht, wird die den Erwartungswert erzeugende Funktion an die aktuellen Verhältnisse bzw. die aktuelle Turbinenkonfiguration angepasst.

In einer vorteilhaften einfachen Ausführungsform wird der wenigstens eine Eigenfrequenz-Erwartungswert als Ergebnis einer auf einer Simulation der Windenergieanlage beruhenden Modellfunktion berechnet, die von dem oder den Umweltparameter(n) und/oder Betriebsparameter(n) abhängig ist, wobei insbesondere in der Simulation simulierte Schwingungsmessdaten erzeugt werden. Diese simulierten Schwingungsmessdaten können beispielsweise mit einer Abtastrate erzeugt werden, die einer real verwendeten Abtastrate entspricht, um die Simulation möglichst realitätsgetreu zu machen. Eine solche Simulation kann die Abhängigkeit der Eigenfrequenz(en) von Umwelt- und Betriebsparametern bereits gut nachbilden. Für den praktischen Einsatz kann die Funktion, die auf der Simulation beruht, entweder direkt übernommen werden, oder, wenn es sich ergibt, dass die tatsächlichen Eigenfrequenzen von denen der Simulation systematisch abweichen, entsprechende systematische Korrekturen und Korrekturterme eingeführt werden.

In einer Alternative hierzu ist ebenfalls vorteilhafterweise vorgesehen, dass der wenigstens eine Eigenfrequenz-Erwartungswert anhand realer Messdaten der realen zu überwachenden Windenergieanlage für Schwingungen des wenigstens einen Rotorblatts unter regulären Betriebsbedingungen berechnet wird. In diesem Fall sind weitere Korrekturen in den meisten Fällen unnötig.

Vorzugsweise wird der wenigstens eine Eigenfrequenz-Erwartungswert als Ergebnis wenigstens einer Fitfunktion (Anpassungsrechnung), insbesondere nach der Methode der kleinsten Quadrate, in Bezug auf die simulierten oder realen Messdaten für Schwingungen des wenigstens einen Rotorblatts berechnet, wobei insbesondere die Fitfunktion der Eigenfrequenz linear von dem oder den Umweltparameter(n) und/oder Betriebsparameter(n) abhängt. Im Falle des Blatteinstellwinkels kann alternativ auch vorteilhaft eine sinus-Funktion oder eine cosinus-Funktion verwendet werden.

Für jede überwachte Eigenfrequenz wird eine eigene Fitfunktion verwendet. Die jeweilige Fitfunktion beruht auf realen oder simulierten Schwingungsmessdaten des Rotorblatts oder der Rotorblätter der Windenergieanlage im regulären Betrieb ohne Störungsmeldungen. Da die Abhängigkeiten von den Umweltparametern und Betriebsparametern in guter Näherung linear approximiert werden können, ist eine besonders einfache und rechenunaufwändige Implementierung des Verfahrens gegeben. Die Methode der kleinsten Quadrate wird hierbei insbesondere auch als multiple Regression bezeichnet. Falls die Fitfunktion nur lineare Abhängigkeiten aufweist, handelt es sich dabei um eine lineare Regression, die im Vorfeld der Überwachung erfolgt. Dies bedeutet im Betrieb, dass während der Überwachung zu jedem momentanen Messwert für die Eigenfrequenz oder Eigenfrequenzen jeweils eine sehr einfache Fitfunktion mit den ebenfalls gemessenen Umweltparametern bzw. Betriebsparametern verwendet wird und somit auf äußerst einfache Weise ein Erwartungswert für die Eigenfrequenz bestimmt wird.

Besonders in dem Fall, dass die an der realen Windenergieanlage bzw. den Rotorblättern direkt gemessenen Schwingungen Grundlage für die wenigstens eine Fitfunktion sein sollen, ist vorzugsweise vorgesehen, dass die wenigstens eine Fitfunktion in einer Lernphase, insbesondere automatisiert, auf eine individuelle Turbinenkonfiguration angepasst wird. Dies kann am Anfang der Lebensdauer bzw. des Betriebs einer Windenergieanlage geschehen, aber auch in jedem Fall, wenn sich die Konfiguration der Windenergieanlage ändert, beispielsweise durch eine Reparatur oder einen Austausch von Rotorblättern oder anderen schwingungsrelevanten Komponenten.

Ebenfalls vorzugsweise wird die wenigstens eine Fitfunktion im laufenden Betrieb durch weitere Messungen unter regulären Betriebsbedingungen verbessert. Dies bedeutet, dass die Datenbasis, aufgrund derer die wenigstens eine Fitfunktion bzw. deren Fitparameter oder Regressionsparameter berechnet wird bzw. werden, vergrößert wird und insbesondere auf größere Bereiche von Umweltparametern und Betriebsparametern ausgedehnt wird, so dass eine noch verlässlichere Modellierung des realen Schwingungsverhaltens des Rotorblatts bzw. der Rotorblätter ermöglicht wird. Auch die Konfidenzintervalle werden bzw. das Konfidenzintervall wird hierdurch durch Vergrößerung der Statistik weiter verbessert.

Vorzugsweise wird auch das wenigstens eine Konfidenzintervall in Abhängigkeit des oder der Umweltparameter und/oder Betriebsparameter berechnet.

Als Eigenfrequenz wird vorzugsweise die erste Blattschwenkfrequenz ermittelt. Dabei handelt es sich um die Schwingungsfrequenz bezüglich der Schwenkbewegung des Blattes innerhalb der Rotorebene. Diese ist besonders empfindlich für Änderungen in der Konfiguration, beispielsweise eine Materialermüdung oder für irreguläre Betriebszustände wie beispielsweise Eisansatz am Rotorblatt. Außerdem findet sich für diese Schwingungsfrequenz im Frequenzspektrum meist ein besonders deutliches Signal. Andere ebenfalls deutliche Signale gibt es üblicherweise bei der ersten Eigenfrequenz in Schlagrichtung sowie bei der zweiten Eigenfrequenz in Schwenk- und Schlagrichtung.

Die der Erfindung zugrunde liegende Aufgabe wird auch durch eine Betriebssteuerungseinrichtung einer Windenergieanlage mit einem Turm, einer auf dem Turm angeordneten Gondel und einem Rotor, der wenigstens ein blattwinkelverstellbares Rotorblatt aufweist, wenigstens einer Messvorrichtung, die zur Erfassung von Rotorblattschwingungen des wenigstens einen Rotorblatts während des Betriebs der Windenergieanlage ausgebildet und angeordnet ist, wobei die Betriebssteuerungseinrichtung zur Ermittlung wenigstens einer momentanen Eigenfrequenz des wenigstens einen Rotorblatts aus den erfassten Rotorblattschwingungen und zur Verarbeitung zusätzlich wenigstens eines Umweltparameters und wenigstens eines Betriebsparameters eingerichtet und/oder ausgebildet ist, die die Eigenfrequenz des wenigstens einen Rotorblatts beeinflussen, gelöst, die dadurch weitergebildet ist, dass die Betriebssteuerungseinrichtung eingerichtet und/oder ausgebildet ist, zusätzlich wenigstens drei Parameter zu verarbeiten, nämlich

- eine Temperatur,
- eine Rotordrehzahl, eine Generatordrehzahl und/oder ein damit verbundener Parameter, insbesondere eine Windgeschwindigkeit, und
- ein Rotorblattwinkel und/oder eine erzeugte Leistung,

wobei die Betriebssteuerungseinrichtung zusätzlich eingerichtet und/oder ausgebildet ist, für die wenigstens eine ermittelte momentane Eigenfrequenz des wenigstens einen Rotorblatts wenigstens einen von dem oder den zusätzlich erfassten Umweltparameter(n) und/oder Betriebsparameter(n) abhängiger Eigenfrequenz-Erwartungswert und wenigstens ein Konfidenzintervall zu berechnen und zu überwachen, ob die wenigstens eine ermittelte momentane Eigenfrequenz innerhalb oder außerhalb des wenigstens einen Konfidenzintervalls um den wenigstens einen Eigenfrequenz-Erwartungswert liegt.

Die Betriebssteuerungsanlage ist insbesondere vorzugsweise eingerichtet und/oder ausgebildet, ein zuvor beschriebenes erfindungsgemäßes Verfahren auszuführen. Damit gelten die für das Verfahren genannten Merkmale und Vorteile auch für die Betriebssteuerungsanlage.

Schließlich wird die der Erfindung zugrunde liegende Aufgabe auch durch eine Windenergieanlage mit einem Turm, einer auf dem Turm angeordneten Gondel und einem Rotor, der wenigstens ein blattwinkelverstellbares Rotorblatt aufweist, wenigstens einer Messvorrichtung, die zur Erfassung von Rotorblattschwingungen des wenigstens einen Rotorblatts während des Betriebs der Windenergieanlage ausgebildet und angeordnet ist, und einer zuvor beschriebenen erfindungsgemäßen Betriebssteuerungsanlage gelöst.

Damit ist das erfindungsgemäße Verfahren in der vorhandenen Betriebssteuerungsanlage der Windenergie implementiert und es erübrigt sich die Notwendigkeit eines zusätzlichen Überwachungssystems.

Die zu den einzelnen Erfindungsgegenständen, also dem Verfahren, der Betriebssteuerungsanlage und der Windenergieanlage genannten Merkmale, Eigenschaften und Vorteile gelten ohne Einschränkung auch für die anderen Erfindungsgegenstände, die sich aufeinander beziehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:

Fig. 1    eine schematisierte Querschnittsdarstellung eines Rotorblatts,

Fig. 2    eine Prinzipdarstellung der Funktionsweise eines Faser-Bragg-Gitter-Sensors,

Fig. 3    Verteilungen von Generatordrehzahl, Pitchwinkel und Leistung einer Windenergieanlage gegen mittlere Windgeschwindigkeit,

Fig. 4    Darstellung der ersten Eigenfrequenz eines Rotorblatts in Abhängigkeit von Pitchwinkel und Generatordrehzahl und

Fig. 5    schematisches Ablaufdiagramm eines Ausführungsbeispiels eines erfindungsgemäßen Verfahrens.

In den Zeichnungen sind jeweils gleiche oder gleichartige Elemente und/oder Teile mit denselben Bezugsziffern versehen, so dass von einer erneuten Vorstellung jeweils abgesehen wird.

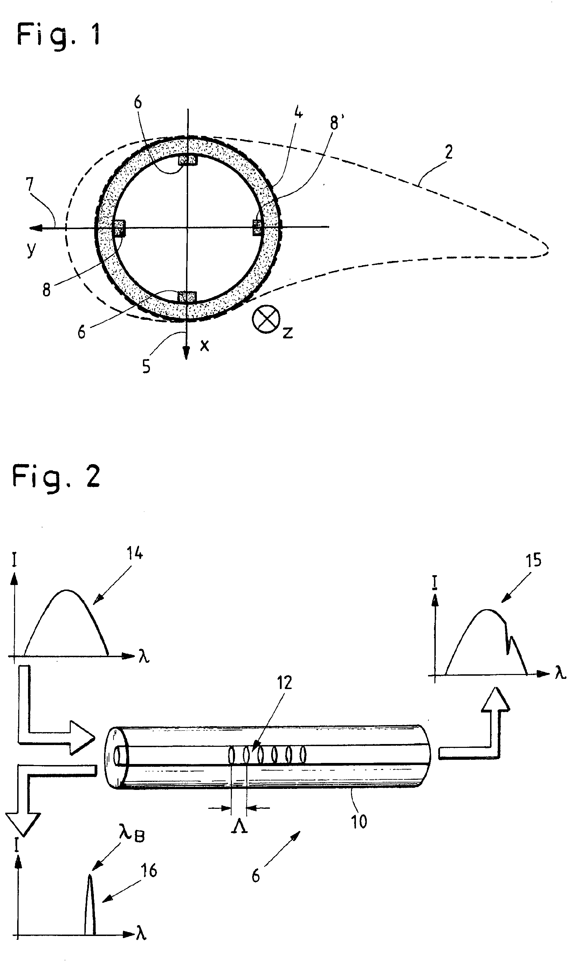

In Fig. 1 ist ein Rotorblatt 2 im Querschnitt schematisch dargestellt. Eine Profilkontur in einem mittleren Abschnitt ist gestrichelt dargestellt. Die Rotorblattwurzel 4 ist als solider Kreis dargestellt. Ein Koordinatensystem ist eingezeichnet, wobei die x-Achse in Schlagrichtung 5 von der Saugseite zur Druckseite zeigt, während die y-Achse in Schwenkrichtung 7 zur Profilvorderkante zeigt. Die z-Achse weist in die Zeichenebene hinein, zur nicht dargestellten Blattspitze hin.

Im inneren Umfang der Rotorblattwurzel 4 sind vier Dehnungssensoren 6, 6', 8, 8' angebracht, jeweils zwei Dehnungssensoren 6, 6' in der Schlagrichtung 5 und zwei Dehnungssensoren 8, 8' in der Schwenkrichtung 7. Bei Verbiegungen des Rotorblatts wird daher im Allgemeinen ein Sensor eines Sensorpaars 6, 6' bzw. 8, 8' gestaucht und der andere Sensor gedehnt. Die Dehnungssensoren 6, 6', 8, 8' können beispielsweise Faser-Bragg-Gitter-Sensoren sein.

In Fig. 2 ist das Prinzip der Funktionsweise eines auf der Grundlage eines Faser-Bragg-Gitters 12 basierenden Dehnungssensors 6 beispielhaft dargestellt. Der Dehnungssensor 6 umfasst einen Lichtleiter 10, in dessen Kern in einem Bereich ein Faser-Bragg-Gitter mit periodisch wechselnder Brechzahl eingeprägt ist. Die Gitterperiode bzw. der Abstand zwischen zwei gleichen Bereichen ist A.

Wenn von einer Seite ein breites Lichtspektrum 14 in den Lichtleiter 10 eingekoppelt wird, wird ein Großteil des Lichtspektrums transmittiert. Aufgrund der Periodizität des Faser-Bragg-Gitters wird jedoch ein schmalbandiger Teil mit der Bragg-Wellenlänge $\lambda_B$ des Lichtspektrums reflektiert, so dass das reflektierte Lichtspektrum 16 nur diese Bragg-Wellenlänge $\lambda_B$ enthält. Beim transmittierten Lichtspektrum 15 hingegen fehlt gegenüber dem eingekoppelten Lichtspektrum 14 genau der reflektierte Anteil bei $\lambda_B$.

Wenn der Lichtleiter 10 durch mechanische Beanspruchung gedehnt oder gestaucht wird, so ändert sich die Periodizität A des Faser-Bragg-Gitters, und die Bragg-Wellenlänge $\lambda_B$ ändert sich entsprechend. Die Wellenlänge des reflektierten Lichts gibt somit Aufschluss über die Dehnung oder Stauchung des Lichtleiters 10. Die laufenden Änderungen der reflektierten Wellenlänge sind somit auch ein Maß für die Schwingungen des Rotorblatts 2, in dem die Faser-Bragg-Gitter-Sensoren angeordnet sind.

Systematische Drifts der Bragg-Wellenlänge $\lambda_B$, beispielsweise durch Temperaturänderungen der Sensoren, lassen sich eliminieren, indem gleichartige Faser-Bragg-Gitter-Sensoren quer oder unbelastet in einem Röhrchen angeordnet werden, die also zwar den gleichen Temperaturänderungen ausgesetzt sind, jedoch nicht durch Rotorblattschwingungen beansprucht werden.

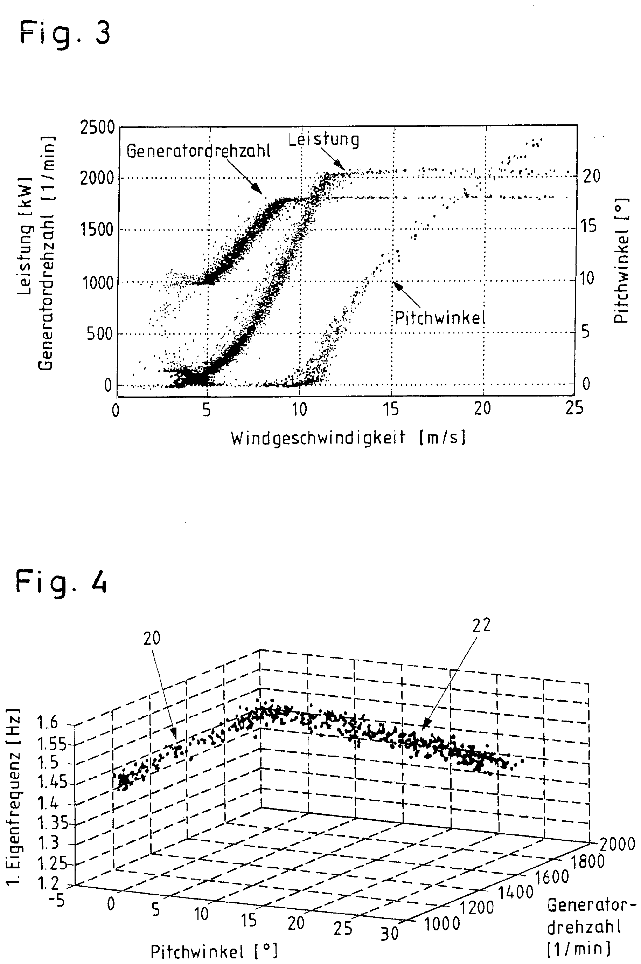

Fig. 3 zeigt die Abhängigkeit von Generatordrehzahl, Leistung und Pitchwinkel, also Rotorblatteinstellwinkel, von der herrschenden Windgeschwindigkeit, für eine Windenergieanlage des Typs MM92 der Anmelderin. Jeder Datenpunkt repräsentiert eine Mittelung über eine gewisse Messdauer von mehreren Minuten, wodurch sich aufgrund der innerhalb der Messdauer auftretenden Schwankungen in den Betriebsbedingungen jeweils eine relativ breite Streuung der Datenpunkte ergibt. Die dickeren Datenpunkte beruhen auf einer einfachen Simulation der Windenergieanlage.

Es ist erkennbar, dass bei niedrigen Windgeschwindigkeiten zunächst nur die Generatordrehzahl mit der Windgeschwindigkeit ansteigt. Dies betrifft den sogenannten Teillastbereich, bei dem die Nennleistung der Windenergieanlage noch nicht erreicht wird. Nach Erreichen einer Generator-Nenndrehzahl wird bei weiter steigender Windgeschwindigkeit die Blattwinkelverstellung zur Leistungsregelung genutzt. Diese setzt bereits vor Erreichen der Nennleistung der Windenergieanlage ein.

In Fig. 4 sind Ergebnisse einer Simulation der Windenergieanlage dargestellt, wobei aus Gründen der Übersichtlichkeit nur simulierte Messwerte für die erste Eigenfrequenz bzw. Grundfrequenz in Schwenkrichtung des Rotorblatts gegen Blatteinstellwinkel (Pitchwinkel) und Generatordrehzahl aufgetragen sind. Es ergibt sich eine im Wesentlichen "V"-förmige Verteilung, wobei ein Schenkel 20 des "V" den Schwachwindbetrieb bei konstantem Blatteinstellwinkel in der 0°-Stellung und bei variabler Generatordrehzahl darstellt und der andere Schenkel 22 den Betrieb bei stärkerem Wind mit konstanter Generator-Nenndrehzahl bei variablem Blatteinstellwinkel. Die simulierten Messwerte zeigen eine Steigerung der ersten Eigenfrequenz mit steigender Generatordrehzahl und ein Abfallen mit steigendem Blatteinstellwinkel. Im gezeigten Bereich sind die Abhängigkeiten in guter Näherung linear. Ähnliche Abhängigkeiten ergeben sich beispielsweise mit der Temperatur, der gemessenen Windgeschwindigkeit und der Leistung.

Wenn das Rotorblatt sich in seinen Schwingungseigenschaften ändern würde, beispielsweise durch Eisansatz oder durch Materialbrüche, würde sich die Eigenfrequenz verschieben, insbesondere würde sich aufgrund der erhöhten Masse bei Eisansatz die erste Eigenfrequenz in Schwenkrichtung verkleinern. Wenn diese Veränderung angesichts der Streubreite der Daten und der Messgenauigkeit signifikant ist, kann dies beispielsweise zu einer Eiswarnung verwendet werden. Es können auch verschiedene Grenzwerte oder Konfidenzintervalle für Eiswarnung einerseits und Leistungsreduktion oder Stillsetzen der Windenergieanlage andererseits definiert werden.

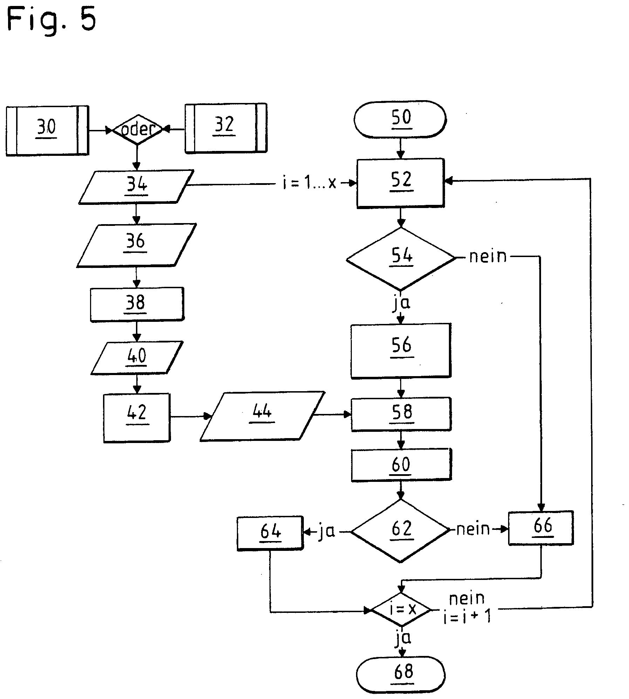

Fig. 5 stellt einen schematischen Ablauf eines Ausführungsbeispiels eines erfindungsgemäßen Verfahrens dar. Das dargestellte Ausführungsbeispiel umfasst zwei Teile, und zwar zunächst einen Teil, in dem die Funktion ermittelt wird, die zur Erzeugung des Eigenfrequenz-Erwartungswerts und gegebenenfalls des Konfidenzintervalls verwendet wird, und weiter einen Teil, in dem die laufende Überwachung des Betriebs der Windenergieanlage, beispielsweise auf Eisansatz am Rotorblatt, erfolgt.

Im ersten Teil des Verfahrens werden entweder aus einer realen Windenergieanlage 30 oder aus einer Simulation 32 Messdaten 34 bezüglich beispielsweise der ersten Eigenfrequenz des Rotorblatts in Schwenkrichtung ermittelt oder entnommen. Diesen Messdaten 34 sind auch Messdaten oder simulierte Daten in Bezug auf Umgebungstemperatur, Windgeschwindigkeit, erzeugter Leistung, Generatordrehzahl, Rotordrehzahl und/oder Blatteinstellwinkel zugeordnet. Anschließend kann eine Stichprobe 36 aus den Messdaten 34 ausgewählt werden, für die bekannt ist, dass jeweils reguläre Betriebsbedingungen geherrscht haben und die einen möglichst großen Bereich der auftretenden Umwelt- und/oder Betriebsparameter abdeckt. Im Schritt 38 wird aus der Stichprobe 36 ein Referenzdatensatz 40 erzeugt, der die Messdaten der Stichprobe 36 mit allen miterfassten Umwelt- und/oder Betriebsparametern in einer geordneten Form aufweist.

Auf den Referenzdatensatz 40 wird eine lineare Regression oder auch ein "Least-Square-Fit" 42 angewandt, um Regressionskoeffizienten 44 zu ermitteln für eine Fitfunktion, die beispielsweise eine lineare oder quadratische Abhängigkeit von einem oder mehreren Umwelt- und/oder Betriebsparametern haben kann. Es kann auch eine Mischform gewählt werden, bei der beispielsweise die Abhängigkeit der ersten Eigenfrequenz von der Generator- oder Rotordrehzahl sowie der Temperatur linear und die Abhängigkeit vom Blattwinkel quadratisch berücksichtigt wird. Aufgrund der Vielzahl von Messwerten wird das zu optimierende Gleichungssystem stark überbestimmt sein und sich eine optimale Lösung für alle Fitparameter finden. Auch das Konfidenzintervall lässt sich mit Hilfe der linearen Regression sicher bestimmen. Die so bestimmte Fitfunktion liefert den Erwartungswert der ersten Eigenfrequenz für jeden momentanen Betriebszustand in Bezug auf Umgebungstemperatur, Drehzahl, Blattwinkel etc.

Der zweite Teil des Ausführungsbeispiels der Fig. 5 betrifft die Überwachung. Es werden beispielsweise eine Eiserkennung gestartet 50 und aktuelle Messwerte aus dem Betrieb der Windenergieanlage eingelesen 52. Diese Messwerte betreffen die Umgebungs- und/oder Betriebsparameter wie Temperatur, Windgeschwindigkeit, Blattwinkel, Leistung und/oder Drehzahl, sowie die laufend erfassten Schwingungssignale des oder der Rotorblätter von den Schwingungs-, Beschleunigungs- oder Dehnungssensoren.

Für die Eiserkennung wird eine Fallunterscheidung 54 gemacht in Bezug auf die Umgebungstemperatur. Ist diese größer als ein Grenzwert aus einem bevorzugten Intervall von 0°C bis 5°C, insbesondere 3 °C, so ist nicht mit einer Eisbildung zu rechnen, und es wird keine Eismeldung produziert. Ist die Umgebungstemperatur allerdings nicht größer als 3 °C, so wird mit den weiteren Schritten 56 bis 62 fortgefahren. Hierzu wird zunächst im Rahmen einer Fast-Fourier-Transformation (FFT) 56 aus den zeitlichen Schwingungsdaten die erste Eigenfrequenz in Schwenkrichtung des Rotorblatts ermittelt. Es können auch andere Eigenfrequenzen, beispielsweise die erste Eigenfrequenz in Schlagrichtung des Rotorblatts und/oder gegebenenfalls die zweite Eigenfrequenz ermittelt werden, falls dies der Eiserkennung dienlich ist und hierfür entsprechende Erwartungswert-Funktionen erstellt worden sind.

Im Schritt 58 wird für die aktuellen Umwelt- und/oder Betriebsbedingungen der Erwartungswert oder die Erwartungswerte für die überwachte Eigenfrequenz oder Eigenfrequenzen aus der gewählten Fitfunktion und den zuvor ermittelten Regressionskoeffizienten 44 berechnet sowie auch das entsprechende Konfidenzintervall 60. In der Fallunterscheidung 62 wird anschließend geprüft, ob die zuvor ermittelte Eigenfrequenz oder die zuvor ermittelten Eigenfrequenzen außerhalb des (jeweiligen) Konfidenzintervalls um den (jeweiligen) Erwartungswert liegt oder liegen. Falls dies nicht der Fall ist, wird wiederum keine Eismeldung ausgegeben 66, falls doch, wird eine Eismeldung ausgegeben 64. Anschließend geht der zweite Teil des Verfahrens in die nächste Iteration, falls nicht eine Austrittsbedingung erfüllt ist und die Eiserkennung beendet wird 68.

Die Abfrage 62 kann als "größer als" oder als "größer gleich" definiert sein, oder als "kleiner als" oder als "kleiner gleich", um zu prüfen, ob eine ermittelte Eigenfrequenz innerhalb oder außerhalb des Konfidenzintervalls liegt.

Bei dem beschriebenen Verfahren liegen die überwachten Eigenfrequenzen üblicherweise im Bereich unterhalb von 10 Hz oder ebenso bevorzugt bis 100 Hz. Daher reicht es im Allgemeinen aus, die Schwingungen der Rotorblätter mit einer Abtastrate von 20 Hz, vorzugsweise bis 50 Hz, oder ebenso bevorzugt bis 100 Hz oder insbesondere bis 200 Hz abzutasten. Um im Rahmen einer FFT eine hohe Messgenauigkeit für die überwachte Eigenfrequenz oder Eigenfrequenzen zu erzielen, sollte die Anzahl der Abtastungen im Bereich von 1000 liegen. Dies ist somit innerhalb einer Messzeit von etwa 10 bis 50 Sekunden getan. Es ist auch möglich, ein laufendes Sample von Messungen zu überwachen, bei dem bei jeder einzelnen Messung die jeweils letzten beispielsweise 1024 oder 2048 Messungen für die FFT verwendet werden. Eine FFT auf beispielsweise 500 bis 1000 Messpunkte zuzüglich Spitzenwertermittlung im Frequenzspektrum zur Ermittlung der Eigenfrequenz oder Eigenfrequenzen dauert mit derzeit verwendeten Datenverarbeitungsanlagen deutlich weniger als 1/50 Sekunde und ist daher auch in einer Betriebssteuerungseinrichtung einer Windenergieanlage implementierbar.

Im Folgenden wird eine Berechnung einer Fitfunktion für einen Eigenfrequenz-Erwartungswert beispielhaft erläutert. Die beispielsweise linear von der Generatordrehzahl, dem Pitchwinkel und der Temperatur abhängende Eigenfrequenz kann beispielsweise durch folgende Modellfunktion beschrieben werden:

$$F(\theta_m, \omega_m, T_m) = A \cdot \theta_m + B \cdot \omega_m + C \cdot T_m + D,$$

wobei F die lineare Modellfunktion mit Einheit [Hz] ist, A, B, C und D die Regressionskoeffizienten der Funktion, $\theta_m$ der mittlere Pitchwinkel während der Messdauer in [°], $\omega_m$ die mittlere Generatordrehzahl während der Messdauer für einen Messpunkt [1/min] und $T_m$ die mittlere Temperatur in [°C]. Die Messdauer bezieht sich hier auf die Dauer, in der die beispielsweise 1000 Samples für die FFT gesammelt worden sind.

Zunächst wird aus den vorliegenden Messdaten ein Referenzdatensatz erzeugt. Dieser beinhaltet die Messwerte für den mittleren Blatteinstellwinkel bzw. Pitchwinkel, die mittlere Generatordrehzahl und die mittlere Temperatur für die genannte Messdauer. Zusätzlich werden die berechnete erste und zweite Eigenfrequenz diesen Werten zugeordnet. Ausgehend von dem Referenzdatensatz werden im nächsten Schritt die Koeffizienten A, B, C und D der Modellfunktion für eine dieser Eigenfrequenzen ermittelt. Da es sich um eine lineare Funktion mehrerer unabhängiger Variablen handelt, wird eine multiple lineare Regression durchgeführt.

Die Modellfunktion kann in allgemeiner Form geschrieben werden als:

$$y_i = x_{i1}b_1 + x_{i2}b_2 + x_{i3}b_3 + b_4 \qquad \text{mit } i = 1, \ldots, n,$$

wobei n der Stichprobenumfang ist und einige hundert bis einige Tausend Messwerte umfassen kann, und $b_1$ bis $b_4$ die Regressionsparameter A bis D sind.

Es ist zweckmäßig, die Modellfunktion in der Matrixschreibweise zu betrachten. Dabei stehen Kleinbuchstaben für Vektoren und Großbuchstaben für Matrizen. Somit gilt

$$y = Xb + e,$$

wobei der Vektor $e = (e_1, e_2, e_3, e_4)$ ein Störterm ist.

In Matrixschreibweise lautet die zuvor genannte Gleichung

$$\begin{pmatrix} y_1 \\ y_2 \\ \vdots \\ y_n \end{pmatrix} = \begin{pmatrix} x_{11} & x_{12} & \cdots & x_{1k} \\ x_{21} & x_{22} & \cdots & x_{2k} \\ \vdots & \vdots & \ddots & \vdots \\ x_{n1} & x_{n2} & \cdots & x_{nk} \end{pmatrix} \begin{pmatrix} b_1 \\ b_2 \\ \vdots \\ b_k \end{pmatrix} + \begin{pmatrix} e_1 \\ e_2 \\ \vdots \\ e_n \end{pmatrix}$$

Im vorliegenden Fall ist $k = 4$ und $x_{i4} = 1$ für alle $i$. Mithilfe einer multiplen Regression können die Koeffizienten $b_1$ bis $b_4$ so bestimmt werden, dass sich die Modellfunktion bestmöglich den Messdaten des Referenzdatensatzes annähert. Die Abweichungen $e_i$ der Modellfunktion zu den tatsächlichen Messwerten werden als Residuen bezeichnet. Diese werden mit der Methode der kleinsten Quadrate ("Least-sqare fit") minimiert, so dass

$$\sum_{i=1}^{n} e_i^2 = e'e = \begin{pmatrix} e_1 & e_2 & \cdots & e_n \end{pmatrix} \begin{pmatrix} e_1 \\ e_2 \\ \vdots \\ e_n \end{pmatrix}$$

minimiert wird. Mit $e = y - Xb$ ergibt sich für die Quadratsummer der Residuen nach einigen Umformungen:

$$e'e = y'y - 2b'X'y + b'X'Xb.$$

Diese Quadratsumme wird minimiert, indem der Ausdruck partiell nach b abgeleitet und gleich Null gesetzt wird:

$$\min_b(e'e) = \frac{\partial(e'e)}{\partial b} = -2X'y + 2X'Xb \overset{!}{=} 0$$

$$X'Xb = X'y$$

Somit ergibt sich für die Koeffizienten b eine Schätzung, welche die Abweichungsquadrate minimiert. Die Koeffizienten bestimmen sich zu $b = (X'X)^{-1} X'y$.

Mit Hilfe der Modellfunktion kann jetzt für beliebige x-Werte ein Erwartungswert der Regression $\hat{y}_{regress}$ für die erste bzw. zweite Eigenfrequenz berechnet werden:

$$\hat{y}_{regress} = y = Xb + e.$$

Allgemein bezeichnet der Erwartungswert $\mu$ in der Statistik den Wert, den eine Zufallsgröße im Mittel annimmt. Da die zugrunde liegende Grundgesamtheit häufig unbekannt oder unendlich groß ist und $\mu$ somit nicht zu bestimmen ist, wird der Erwartungswert durch den arithmetischen Mittelwert $\bar{x}$ aus einer Stichprobe angenähert:

$$\bar{x} = \frac{1}{n} \sum_{i=1}^{n} x_i$$

Um ein Maß für die Streuung der Stichprobenwerte um ihren Mittelwert zu erhalten, bietet sich die empirische Standardabweichung s an:

$$s = \sqrt{\frac{1}{n-1} \sum_{i=1}^{n} (x_i - \bar{x})^2}$$

Bei größer werdendem Stichprobenumfang konvergiert der arithmetische Mittelwert $\bar{x}$ zum Erwartungswert $\mu$

hin. Das Gleiche gilt für die empirische Standardabweichung s, die sich mit zunehmendem Stichprobenumfang der Standardabweichung σ der Grundgesamtheit annähert. Wird eine Normalverteilung der Stichprobenmesswerte x vorausgesetzt, kann mit Hilfe der Standardabweichung die Wahrscheinlichkeit P angegeben werden, mit der ein Messwert innerhalb eines Intervalls um den Erwartungswert vorkommt. Dieser Bereich wird auch Konfidenzintervall genannt. Die Grenzen dieses Konfidenzintervalls betragen z.B. bei einer Wahrscheinlichkeit von 99 %:

$$\mu - u_{99} \cdot \sigma < X < \mu + u_{99} \cdot \sigma$$.

Der Wert $u_{99}$ kann Tabellen der Normalverteilung entnommen werden. Für ein Konfidenzintervall von 99% ist $u_{99} = 2,58$.

Nachfolgend soll nun gezeigt werden, wie die Streuung der Regression bestimmt wird. Für die multiple Regression kann der Standardfehler berechnet werden. Ausgehend von der Varianz der Stichprobenresiduen

$$\tilde{s}_e^2 = \frac{1}{n} \sum_{i=1}^{n} e_i^2 = \frac{e'e}{n}$$

wird ein erwartungstreuer Schätzer für die Varianz der Grundgesamtheit bestimmt, indem die Varianz der Stichprobenresiduen mit dem Faktor n/(n-k) korrigiert wird, wobei n die Anzahl der Beobachtungen und k die Anzahl der Freiheitsgrade, im Beispielsfall k = 4, ist. Die Wurzel der korrigierten Varianz ergibt den Standardfehler der Regression

$$\hat{s}_{regress} = \sqrt{\frac{e'e}{n-k}}$$.

Bei einem genügend großen Stichprobenumfang nähert sich $\hat{y}_{regress}$ dem Erwartungswert μ der Grundgesamtheit und $\hat{s}_{regress}$ der Standardabweichung σ der Grundgesamtheit an. Dies kann in guter Näherung für einen Stichprobenumfang n > 500 angenommen werden. Es kann somit aus der multiplen Regression ein Konfidenzintervall angegeben werden, in dem die tatsächlichen Messdaten $y_{real}$ liegen werden. Bei Annahme einer Normalverteilung der Messwerte bedeutet dies, dass mit einer Wahrscheinlichkeit von 99% gilt

$$\hat{y}_{regress} - 2.58 \cdot \hat{s}_{regress} < y_{real} < \hat{y}_{regress} + 2.58 \cdot \hat{s}_{regress}$$.

Dieser Sachverhalt wird im erfindungsgemäßen Ausführungsbeispiel für die Eiserkennung genutzt. Der dem entwickeltem Verfahren zugrunde liegende Gedanke ist, dass Eis an den Rotorblättern zu einer Massenzunahme führt, die sich durch eine Abnahme der ersten (und zweiten) Eigenfrequenz bemerkbar macht. Für einen konkreten Betriebspunkt wird der Erwartungswert μ über die Modellfunktion bestimmt. Anschließend werden die tatsächlichen Messwerte für die erste und gegebenenfalls die zweite Eigenfrequenz mit dem jeweiligen Erwartungswert verglichen. Ist der Messwert für die erste Eigenfrequenz oder sind beide Messwerte kleiner als die untere Grenze des jeweiligen Konfidenzintervalls um den Erwartungswert, kann mit hoher Wahrscheinlichkeit von Eis am Rotorblatt ausgegangen werden. Als Nebenbedingung wird gestellt, dass die mittlere Temperatur kleiner ist als 3 °C. Die Irrtumswahrscheinlichkeit bei signifikanter Abweichung beträgt dann höchstens 0,5 %.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

Bezugszeichenliste

2    Rotorblatt
4    Rotorblattwurzel

| 5 | Schlagrichtung |
| 6, 6' | Dehnungssensor in Schlagrichtung |
| 7 | Schwenkrichtung |
| 8, 8' | Dehnungssensor in Schwenkrichtung |
| 10 | Lichtleitfaser |
| 12 | Faser-Bragg-Gitter |
| 14 | eingekoppeltes Lichtspektrum |
| 15 | transmittiertes Lichtspektrum |
| 16 | reflektiertes Lichtspektrum |
| 20 | Teillastbereich |
| 22 | Volllastbereich |
| 30 | Reale Anlage |
| 32 | Simulation |
| 34 | Messdaten |
| 36 | Stichprobe aus Messdaten |
| 38 | Erzeugung eines Referenzdatensatzes |
| 40 | Referenzdatensatz |
| 42 | Durchführung multiple Regression |
| 44 | Regressionskoeffizienten |
| 50 | Start der Eiserkennung |
| 52 | Einlesen von Messwerten |
| 54 | Fallunterscheidung: Temperatur > 3°C |
| 56 | FFT, Bestimmung der 1. (und 2.) Eigenfrequenz |
| 58 | Berechnung des Erwartungswerts |
| 60 | Berechnung des Konfidenzintervalls |
| 62 | Fallunterscheidung: signifikante Abweichung? |
| 64 | Eismeldung |
| 66 | keine Eismeldung |
| 68 | Ende der Eiserkennung |
| $\lambda_B$ | Bragg-Wellenlänge |
| $\Lambda$ | Periode des Faser-Bragg-Gitters |

**Patentansprüche**

1. Verfahren zur Überwachung des Betriebs einer Windenergieanlage mit einem Turm, einer auf dem Turm angeordneten Gondel und einem Rotor, der wenigstens ein blattwinkelverstellbares Rotorblatt (2) aufweist, wobei während des Betriebs der Windenergieanlage mittels wenigstens einer Messvorrichtung (6, 6', 8, 8') Rotorblattschwingungen des wenigstens einen Rotorblatts (2) erfasst werden und aus den erfassten Rotorblattschwingungen wenigstens eine momentane Eigenfrequenz des wenigstens einen Rotorblatts (2) ermittelt wird, wobei zusätzlich wenigstens ein Umweltparameter und wenigstens ein Betriebsparameter erfasst werden, die die wenigstens eine Eigenfrequenz des wenigstens einen Rotorblatts (2) beeinflussen, **dadurch gekennzeichnet, dass** zusätzlich wenigstens drei Parameter erfasst werden, nämlich

   - eine Temperatur,
   - eine Rotordrehzahl, eine Generatordrehzahl und/oder ein damit verbundener Parameter, insbesondere eine Windgeschwindigkeit, und
   - ein Rotorblattwinkel und/oder eine erzeugte Leistung, wobei für die wenigstens eine ermittelte momentane Eigenfrequenz des wenigstens einen Rotorblatts (2) wenigstens ein von den zusätzlich erfassten Umweltparameter(n) und Betriebsparameter(n) abhängiger Eigenfrequenz-Erwartungswert und wenigstens ein Konfidenzintervall berechnet (56, 58) werden, wobei überwacht (62) wird, ob die ermittelte momentane Eigenfrequenz innerhalb oder außerhalb des Konfidenzintervalls um den Eigenfrequenz-Erwartungswert liegt.

2. Verfahren nach Anspruch 1, **dadurch gekennzeichnet, dass** eine Überschreitung des wenigstens einen Konfidenzintervalls an ein Betriebsführungssystem der Windenergieanlage gemeldet (64) wird.

3. Verfahren nach Anspruch 1 oder 2, **dadurch gekennzeichnet, dass** die Erfassung der Schwingungen des wenigstens einen Rotorblatts (2) mittels rotorfester, insbesondere rotorblattfester, Sensorik erfolgt, die insbesondere Beschleunigungssensoren, Verformungssensoren und/oder Dehnungssensoren (6, 6', 8, 8') umfasst.

4. Verfahren nach einem der Ansprüche 1 bis 3, **dadurch gekennzeichnet, dass** eine dem wenigstens einen Eigenfrequenz-Erwartungswert zugrunde liegende Funktion mittels statistischer Auswertung von Messdaten auf eine aktuelle Turbinenkonfiguration anpassbar ist.

5. Verfahren nach einem der Ansprüche 1 bis 4, **dadurch gekennzeichnet, dass** der wenigstens eine Eigenfrequenz-Erwartungswert als Ergebnis einer auf einer Simulation der Windenergieanlage (32) beruhenden Modellfunktion berechnet wird, die von dem oder den Umweltparameter(n) und/oder Betriebsparameter(n) abhängig ist, wobei insbesondere in der Simulation simulierte Schwingungsmessdaten erzeugt werden.

6. Verfahren nach einem der Ansprüche 1 bis 5, **dadurch gekennzeichnet, dass** der wenigstens eine Eigenfrequenz-Erwartungswert anhand realer Messdaten (34, 36, 38) der realen zu überwachenden Windenergieanlage (30) für Schwingungen des wenigstens einen Rotorblatts (2) unter regulären Betriebsbedingungen berechnet wird.

7. Verfahren nach Anspruch 5 oder 6, **dadurch gekennzeichnet, dass** der wenigstens eine Eigenfrequenz-Erwartungswert als Ergebnis wenigstens einer Fitfunktion (Anpassungsrechnung), insbesondere nach der Methode der kleinsten Quadrate, in Bezug auf die simulierten oder realen Messdaten für Schwingungen des wenigstens einen Rotorblatts (2) berechnet wird, wobei insbesondere die Fitfunktion der Eigenfrequenz linear von dem oder den Umweltparameter(n) und/oder Betriebsparameter(n) abhängt, wobei insbesondere die wenigstens eine Fitfunktion in einer Lernphase, insbesondere automatisiert, auf eine individuelle Turbinenkonfiguration angepasst wird.

8. Verfahren nach Anspruch 7, **dadurch gekennzeichnet, dass** die wenigstens eine Fitfunktion im laufenden Betrieb durch weitere Messungen unter regulären Betriebsbedingungen verbessert wird.

9. Verfahren nach einem der Ansprüche 1 bis 8, **dadurch gekennzeichnet, dass** auch das wenigstens eine Konfidenzintervall in Abhängigkeit des oder der Umweltparameter und/oder Betriebsparameter berechnet wird.

10. Verfahren nach einem der Ansprüche 1 bis 9, **dadurch gekennzeichnet, dass** als Eigenfrequenz die erste Blattschwenkfrequenz ermittelt wird.

11. Betriebssteuerungseinrichtung einer Windenergieanlage mit einem Turm, einer auf dem Turm angeordneten Gondel und einem Rotor, der wenigstens ein blattwinkelverstellbares Rotorblatt (2) aufweist, wenigstens einer Messvorrichtung (6, 6', 8, 8'), die zur Erfassung von Rotorblattschwingungen des wenigstens einen Rotorblatts (2) während des Betriebs der Windenergieanlage ausgebildet und angeordnet ist, wobei die Betriebssteuerungseinrichtung zur Ermittlung wenigstens einer momentanen Eigenfrequenz (56) des wenigstens einen Rotorblatts (2) aus den erfassten Rotorblattschwingungen und zur Verarbeitung zusätzlich wenigstens eines Umweltparameters und wenigstens eines Betriebsparameters eingerichtet und/oder ausgebildet ist, die die Eigenfrequenz des wenigstens einen Rotorblatts (2) beeinflussen, **dadurch gekennzeichnet, dass** die Betriebssteuerungseinrichtung eingerichtet und/oder ausgebildet ist, zusätzlich wenigstens drei Parameter zu verarbeiten, nämlich

- eine Temperatur,
- eine Rotordrehzahl, eine Generatordrehzahl und/oder ein damit verbundener Parameter, insbesondere eine Windgeschwindigkeit, und
- ein Rotorblattwinkel und/oder eine erzeugte Leistung, wobei die Betriebssteuerungseinrichtung zusätzlich eingerichtet und/oder ausgebildet ist, für die wenigstens eine ermittelte momentane Eigenfrequenz des wenigstens einen Rotorblatts (2) wenigstens einen von dem oder den zusätzlich erfassten Umweltparameter(n) und/oder Betriebsparameter(n) abhängiger Eigenfrequenz-Erwartungswert und wenigstens ein Konfidenzintervall zu berechnen (58, 60) und zu überwachen (62), ob die wenigstens eine ermittelte momentane Eigenfrequenz innerhalb oder außerhalb des wenigstens einen Konfidenzintervalls um den wenigstens einen Eigenfrequenz-Erwartungswert liegt.

12. Betriebssteuerungsanlage nach Anspruch 11, **dadurch gekennzeichnet, dass** die Betriebssteuerungsanlage eingerichtet und/oder ausgebildet ist, ein Verfahren nach einem der Ansprüche 1 bis 10 auszuführen.

13. Windenergieanlage mit einem Turm, einer auf dem Turm angeordneten Gondel und einem Rotor, der wenigstens ein blattwinkelverstellbares Rotorblatt (2) aufweist, wenigstens einer Messvorrichtung (6, 6', 8, 8'), die zur Erfassung von Rotorblattschwingungen des wenigstens einen Rotorblatts (2) während des Betriebs der Windenergieanlage ausgebildet und angeordnet ist und einer Betriebssteuerungsanlage nach Anspruch 11 oder 12.

**Claims**

1. A method for monitoring the operation of a wind turbine having a tower, a nacelle arranged on the tower and a rotor that has at least one blade-angle-adjustable rotor blade (2), wherein during the operation of the wind turbine, vibrations of the at least one rotor blade (2) are detected by at least one measuring device (6, 6', 8, 8'), and at least one momentary natural frequency of the at least one rotor blade (2) is determined from the detected rotor blade vibrations, wherein additionally at least one environmental parameter and at least one operating parameter are detected that influence the at least one natural frequency of the at least one rotor blade (2), **characterized in that** at least three parameters are additionally detected, i.e.:

   - a temperature,
   - a rotor speed, a generator speed and/or a parameter associated therewith, in particular a wind speed, and
   - a rotor blade angle and/or a generated output,

   wherein at least one anticipated natural frequency value dependent on the additionally detected environmental parameter(s) and operating parameter(s) and at least one confidence interval are calculated (56, 58) for the at least one determined momentary natural frequency of the at least one rotor blade (2), wherein it is monitored (62), whether the determined momentary natural frequency lies inside or outside of the confidence interval around the anticipated natural frequency value.

2. The method according to claim 1, **characterized in that** an exceeding of the at least one confidence interval is reported to an operating system of the wind turbine (64).

3. The method according to claim 1 or 2, **characterized in that** the vibrations of the at least one rotor blade (2) are detected by means of sensors fixed to the rotor, in particular fixed to the rotor blade, that comprise in particular acceleration sensors, deformation sensors and/or strain sensors (6, 6', 8, 8').

4. The method according to one of claims 1 to 3, **characterized in that** a function underlying the at least one anticipated natural frequency value can be adapted to a current turbine configuration by statistically evaluating measured data.

5. The method according to one of claims 1 to 4, **characterized in that** the at least one anticipated natural frequency value is calculated as the result of a model function based on a simulation of the wind turbine (32) that depends on the environmental parameter(s) and/or operating parameter(s), wherein in particular simulated vibration measured data are generated in the simulation.

6. The method according to one of claims 1 to 5, **characterized in that** the at least one anticipated natural frequency value is calculated using real measured data (34, 36, 38) of the real wind turbine (30) to be monitored for vibrations of the at least one rotor blade (2) under regular operating conditions.

7. The method according to claim 5 or 6, **characterized in that** the at least one anticipated natural frequency value is calculated as the result of at least one fit function (adaptation calculation), in particular according to the least squares method, with reference to the simulated real measured data for vibrations of the at least one rotor blade (2), wherein in particular the fit function of the natural frequency linearly depends on the environmental parameter(s) and/or operating parameter(s), wherein in particular the at least one fit function is adapted, in particular automatically, to an individual turbine configuration in a learning phase.

8. The method according to claim 7, **characterized in that** the at least one fit function is improved in ongoing operation by additional measurements under regular operating conditions.

9. The method according to one of claims 1 to 8, **characterized in that** the at least one confidence interval is also calculated depending on the environmental parameter(s) and/or operating parameter(s).

10. The method according to one of claims 1 to 9, **characterized in that** the first blade vibration frequency is determined as the natural frequency.

**11.** An operation control device of a wind turbine having a tower, a nacelle arranged on the tower, and a rotor that has at least one blade-angle-adjustable rotor blade (2), at least one measuring apparatus (6, 6', 8, 8') that is designed and arranged to detect rotor blade vibrations of the at least one rotor blade (2) during the operation of the wind turbine, wherein the operation control device is configured and/or designed to determine at least one momentary natural frequency (56) of the at least one rotor blade (2) and to process in addition at least one environmental parameter and at least one operating parameter that influence the natural frequency of the at least one rotor blade (2), **characterized in that** the operation control device is configured and/or designed to additionally process at least three parameters, i.e.:

  - a temperature,
  - a rotor speed, a generator speed and/or a parameter associated therewith, in particular a wind speed, and
  - a rotor blade angle and/or a generated output,

wherein the operation control device is additionally configured and/or designed to calculate (58, 60) at least one anticipated natural frequency value dependent on the additionally detected environmental parameters(s) and operating parameter(s) and at least one confidence interval for the at least one determined momentary natural frequency of the at least one rotor blade (2), and to monitor (62) whether a determined momentary natural frequency lies inside or outside the at least one confidence interval around the anticipated at least one natural frequency value.

**12.** The operation control system according to claim 11, **characterized in that** the operation control system is configured and/or designed to perform the method according to one of claims 1 to 10.

**13.** A wind turbine having a tower, a nacelle arranged on the tower, and a rotor that has at least one blade-angle-adjustable rotor blade (2), at least one measuring apparatus (6, 6', 8, 8') that is designed and arranged to detect rotor blade vibrations of the at least one rotor blade (2) during the operation of the wind turbine, and an operation control system according to claim 11 or 12.

**Revendications**

**1.** Procédé permettant de contrôler le fonctionnement d'une éolienne ayant une tour, une nacelle agencée sur la tour et un rotor, comportant au moins une pale de rotor (2) à angle de pale réglable, dans lequel des vibrations de pale de rotor de ladite au moins une pale de rotor (2) sont enregistrées pendant le fonctionnement de l'éolienne au moyen d'au moins un dispositif de mesure (6, 6', 8, 8') et au moins une fréquence propre instantanée de ladite au moins une pale de rotor (2) est déterminée à partir des vibrations de pale de rotor enregistrées, dans lequel au moins un paramètre environnemental et au moins un paramètre de fonctionnement sont enregistrés en plus, lesquels paramètres influant sur ladite au moins une fréquence propre de ladite au moins une pale de rotor (2), **caractérisé en ce qu'**au moins trois paramètres supplémentaires sont enregistrés en plus, à savoir :

  - une température,
  - une vitesse de rotation de rotor, une vitesse de rotation de générateur et/ou un paramètre associé à celles-ci, en particulier une vitesse de vent, et
  - un angle de pale de rotor et/ou une puissance générée,

au moins une valeur attendue de la fréquence propre dépendante du ou des paramètres environnementaux et/ou du ou des paramètres de fonctionnement enregistrés en plus et au moins un intervalle de confiance étant calculés (56, 58) pour ladite au moins une fréquence propre instantanée déterminée de ladite au moins une pale de rotor (2), une surveillance (62) étant effectuée pour déterminer si la fréquence propre instantanée déterminée est à l'intérieur ou en dehors de l'intervalle de confiance autour de la valeur attendue de la fréquence propre.

**2.** Procédé selon la revendication 1, **caractérisé en ce qu'**un dépassement dudit au moins un intervalle de confiance est rapporté (64) à un système de commande opérationnelle de l'éolienne.

**3.** Procédé selon la revendication 1 ou la revendication 2, **caractérisé en ce que** l'enregistrement des vibrations de ladite au moins une pale de rotor (2) s'effectue au moyen d'un système de capteurs fixe par rapport au rotor, en particulier fixe par rapport à la pale de rotor, lequel système de capteurs comprend notamment des capteurs d'accélération, des capteurs de déformation et/ou des capteurs de contrainte (6, 6', 8, 8').

**4.** Procédé selon l'une des revendications 1 à 3, **caractérisé en ce qu'**une fonction sous-jacente de ladite au moins une valeur attendue de la fréquence propre peut être adaptée à une configuration de turbine actuelle au moyen d'une évaluation statistique de données de mesure.

**5.** Procédé selon l'une des revendications 1 à 4, **caractérisé en ce que** ladite au moins une valeur attendue de la fréquence propre est calculée comme le résultat d'une fonction de modélisation basée sur une simulation de l'éolienne (32) qui dépend du ou des paramètres environnementaux et/ou du ou des paramètres de fonctionnement, des données de mesure de vibrations simulées étant en particulier générées lors de la simulation.

**6.** Procédé selon l'une des revendications 1 à 5, **caractérisé en ce que** ladite au moins une valeur attendue de la fréquence propre est calculée au moyen de données de mesure réelles (34, 36, 38) de l'éolienne (30) réelle à surveiller pour les vibrations de ladite au moins une pale de rotor (2) dans des conditions de fonctionnement régulières.

**7.** Procédé selon la revendication 5 ou 6, **caractérisé en ce que** ladite au moins une valeur attendue de la fréquence propre est calculée comme le résultat d'au moins une fonction d'ajustement (calcul d'adaptation), en particulier selon la méthode des moindres carrés, par rapport aux données de mesure simulées ou réelles pour des vibrations de ladite au moins une pale de rotor (2), dans lequel en particulier la fonction d'ajustement de la fréquence propre dépend linéairement du ou des paramètres environnementaux et/ou du ou des paramètres de fonctionnement, ladite au moins une fonction d'ajustement étant notamment adaptée à une configuration de turbine individuelle, lors d'une phase d'apprentissage, en particulier automatisée.

**8.** Procédé selon la revendication 7, **caractérisé en ce que** ladite au moins une fonction d'ajustement est améliorée pendant le fonctionnement continu par des mesures supplémentaires dans des conditions de fonctionnement régulières.

**9.** Procédé selon l'une des revendications 1 à 8, **caractérisé en ce que** ledit au moins un intervalle de confiance est également calculé en fonction du ou des paramètres environnementaux et/ou paramètres de fonctionnement.

**10.** Procédé selon l'une des revendications 1 à 9, **caractérisé en ce que** la première fréquence vibratoire de pale est établie en tant que fréquence propre.

**11.** Installation de commande opérationnelle d'une éolienne ayant une tour, une nacelle agencée sur la tour et un rotor, comportant au moins une pale de rotor (2) à angle de pale réglable, au moins un dispositif de mesure (6, 6', 8, 8') qui est configuré et agencé de manière à enregistrer des vibrations de pale de rotor de ladite au moins une pale de rotor (2) pendant le fonctionnement de l'éolienne, dans lequel le dispositif de commande opérationnelle est conçu et/ou configuré pour déterminer au moins une fréquence propre instantanée (56) de ladite au moins une pale de rotor (2) à partir des vibrations de pale de rotor enregistrées et pour traiter en plus au moins un paramètre environnemental et au moins un paramètre de fonctionnement qui influent sur la fréquence propre de ladite au moins une pale de rotor (2), **caractérisé en ce que** le dispositif de commande opérationnelle est conçu et/ou configuré pour traiter en plus au moins trois paramètres, à savoir :

- une température,
- une vitesse de rotation de rotor, une vitesse de rotation de générateur et/ou un paramètre associé à celles-ci, en particulier une vitesse de vent, et
- un angle de pale de rotor et/ou une puissance générée,

le dispositif de commande opérationnelle étant de plus conçu et/ou configuré pour calculer (58, 60) au moins une valeur attendue de la fréquence propre dépendante du ou des paramètres environnementaux et/ou du ou des paramètres de fonctionnement et au moins un intervalle de confiance pour ladite au moins une fréquence propre instantanée déterminée de ladite au moins une pale de rotor (2), et pour surveiller (62) si ladite au moins une fréquence propre instantanée déterminée est à l'intérieur ou en dehors dudit au moins un intervalle de confiance autour de la valeur attendue de la fréquence propre.

**12.** Installation de commande opérationnelle selon la revendication 11, **caractérisée en ce que** l'installation de commande opérationnelle est conçue et/ou configurée pour mettre en oeuvre un procédé selon l'une des revendications 1 à 10.

**13.** Éolienne ayant une tour, une nacelle agencée sur la tour et un rotor comportant au moins une pale de rotor (2) à angle de pale réglable, au moins un dispositif de mesure (6, 6', 8, 8') configuré et agencé de manière à enregistrer des vibrations de pale de rotor de ladite au moins une pale de rotor (2) pendant le fonctionnement de l'éolienne, et une installation de commande opérationnelle selon la revendication 11 ou 12.

# Fig. 1

# Fig. 2

EP 2 956 661 B1

Fig. 3

Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005017054 A1
- WO 2012000509 A2
- EP 2511524 A1